# EUROPEAN PATENT APPLICATION

(11) **EP 4 664 750 A1**
(43) Date of publication of application: **17.12.2025**
(21) Application number: 24182232.9
(22) Date of filing: 14.06.2024
(51) Int. Cl.: H02S 20/32, H02S 10/12

(54) **A SOLAR TREE**

(71) Applicant: Treetino corp s.r.o., 25726 Cesky Sternberk (CZ)
(72) Inventor: Masek, Dominik, 46343 Bílá (CZ)
(74) Representative: Poljak, Michal

(57) **Abstract**

The invention relates to a solar tree (1) comprising: a trunk (2); at least one first branch (3) rotatably connected to the trunk (2) and driven by a first motor (4); at least one second branch (5) rotatably connected to the first branch (3) and driven by a second motor (6), or fixedly connected to the first branch (3); and at least two photovoltaic panels (7) fixedly connected to the second branch (5), wherein the photovoltaic panels (7) are connected in parallel to each other and configured to charge a battery (8).

## Description

### Field of Technology

This invention relates to artificial tree structures fitted with leaf-shaped photovoltaic panels or other means for generating renewable electric energy.

### Background of the Invention

In prior art, artificial tree structures are known to be provided with means for producing renewable electric energy, such as photovoltaic panels in the shape of leaves or wind power plants. The term "tree" in the context of the present invention refers to a tree-like or bush-like columnar structure.

The Chinese patent application CN 113872497 A and the Chinese utility model CN 212324025 U disclose (see Fig. 2 and corresponding reference signs) a solar tree comprising: a base 1; a trunk 2 fixed on the base 1; at least one first branch 3 rotatably connected to the trunk 2 and driven by a first servomotor 4; at least one second branch (no reference sign) fixedly connected to the first branch 3; one photovoltaic panel 5 rotatably connected to each second branch and driven by a second servomotor 6. The effect is the tilting of all photovoltaic panels 5 on one first branch together (when the second servomotors 6 are idle) or of each photovoltaic panel 5 separately (when the second servomotors 6 are in operation). A disadvantage of this solar tree is that if one panel is shaded, that panel must be rotated by a separate second servomotor to a better position relative to the sun. However, a shaded panel requiring rotation or tilting already produces no (or only minimal) electric energy even when partially shaded, so the energy produced by other panels must be used to rotate the corresponding second servomotor. If shading occurs on multiple panels at the same time, or on almost all of them, then there are not enough unshaded panels on the tree relative to the second servomotors. The ratio of unshaded panels to second servomotors is always a maximum of 1:1 at 100 % illumination, and at partial shading there are fewer unshaded panels than second servomotors (e.g., 1:2, 1:3, etc.). Thus, the energy consumption for rotating each shaded panel is high since many to all of the second servomotors must be in operation when searching for a more suitable position relative to the sun in such multiple shading. The solar tree itself thus has to consume more energy from elsewhere to operate, e.g. energy stored in a battery or from the grid.

The Chinese patent application CN 113872498 A discloses (see Figures 1, 2 and corresponding reference signs) a solar tree comprising: a base 1; a trunk 3 rotatably connected to the base 1 and driven by a first servomotor 2; at least one first branch 4 fixedly connected to the trunk 3; at least one second branch (no reference sign) fixedly connected to the first branch 4; one photovoltaic panel 5 rotatably connected to each second branch and driven by a second servomotor 6. The effect is the tilting of all photovoltaic panels 5 on all first branches together (when the second servomotors 6 are idle) or of each photovoltaic panel 5 separately (when the second servomotors 6 are in operation). A disadvantage of this solar tree is the low variability of panel rotation within the different first branches, as all first branches are fixedly connected to the trunk.

The Chinese patent application CN 104779895 A discloses a solar-wind tree comprising: a trunk; at least a first branch fixedly connected to the trunk and provided with one photovoltaic panel and with one wind power plant. The disadvantage of this solar tree is the lack of ability to rotate the branches or panels in case of shading.

The Korean patent application KR 20120023961 A discloses a solar tree with a branch and photovoltaic panels attached to it. The branch is divided into a plurality of vertically rotatable segments, wherein at least one photovoltaic panel is fixedly connected to each segment, and wherein the segments can rotate relative to each other. A disadvantage of this solar tree is that the branches or panels can only be rotated in the vertical axis in case of shading, not in all degrees of freedom.

Thus, in the prior art, there emerges a need and the object of the present invention is to provide a solar tree exhibiting lower power consumption for self-manipulation in case of shading.

### Summary of the Invention

The object of the present invention is achieved by the solar tree according to claim 1. Preferred embodiments of the solar tree are according to claims 2 to 14.

The underlying idea of the solar tree in the embodiment with a rotatable connection of the first and second branches according to the present invention is that in case of partial shading of one or more panels, but not all panels, within one second branch, the parallel connection of the panels ensures that sufficient electrical power is produced by the remaining fully illuminated panels to recharge a battery (integral or external) and to drive the corresponding second motor to rotate or tilt the entire second branch from the battery, thereby reducing shading. While the battery power is consumed to rotate or tilt the entire second branch, at the same time the consumption is balanced by the output of the remaining unshaded panels. If shading occurs on multiple panels at the same time, or on almost all of them, there are a sufficient number of unshaded panels on the tree relative to the second motors. The ratio of unshaded panels to second motors is always more than 1: 1 at 100 % illumination (e.g., 2:1, 3:1, 4:1, 5:1), etc., and at partial shading there may still be more unshaded panels than second motors (e.g., 2:1, 3:1). Thus, the energy consumption to rotate each shaded panel is lower despite the fact that many to all of the second motors have to be in operation when searching for a more suitable position relative to the sun in such multiple shading. However, the consumption of these second motors is offset by the energy production of the remaining panels. The solar tree itself thus uses less energy from elsewhere to operate, e.g. energy stored in the battery or from the grid.

The underlying idea of the solar tree in the embodiment with a fixed connection of the first and second branches according to the present invention lies in the optimal angle of connection of the first and second branches, while reducing the production costs by the motors required to rotatably drive the second branch. Due to an optimal angle, the position of the photovoltaic panel will follow the path of the sun only by rotating the first branch.

The second branches with photovoltaic panels do not have to be attached to the solar tree facing south, because thanks to the rotation mechanism they can always be rotated perpendicular to the sun even if the second branch is facing north.

Another advantage of multiple panels on one second branch is the possibility to turn their active surface downwards quickly and simultaneously in the event of hail (for protection) or maintenance (for cleaning with a stream of pressurized water from below).

Similar to the prior art, the tilting of all photovoltaic panels on one first branch is common (when the second motors are idle) or individual for each photovoltaic panel (when the second motors are active).

Preferably, the first and second motors are connected to a battery, preferably arranged in the trunk (but other locations are also available, e.g. underground or in the branches). The battery is used to store the electric energy produced and can be further used for the operation of the solar tree itself (e.g. for tilting) as well as for other applications and functions of the solar tree (see below).

Preferably, the photovoltaic panels are configured to drive the second motor by connecting via a battery (i.e. first storing the energy in the battery and then using it to drive the second motor).

Preferably the solar tree is connected to an additional external battery for use in households, commercial premises or industry. The solar tree thus allows energy saving in applications outside the tree.

Preferably the motor is a servomotor.

Preferably, the photovoltaic panel is bifacial and includes a reflective foil to extract energy from the other (bottom) side of the panel.

Preferably, the trunk is divided into a central trunk portion and at least one branched trunk portion, wherein at least one first branch is rotatably connected to the branched trunk portion. The division allows for greater geometric variation in the arrangement of branches and panels in space. In the context of the present invention as a whole, the trunk is at least a central trunk portion.

Preferably, the solar tree further comprises a wind power plant fixedly connected to the trunk, in particular to the branched trunk portion. By wind power plant, in the context of the present invention, a small wind turbine or a small vertical wind power plant is understood. In this embodiment, the possibility of controlling the position and rotation of the panels is further advantageous, since the wind power plant itself can also be a source of shading for the panels. The wind power plants are always on a separate branch for better use of the wind energy.

Preferably, an illumination sensor is arranged at a distal end of the first or second branch or of the branched trunk portion for sensing the current angle of illumination of specific parts of the solar tree by solar radiation.

Preferably, the solar tree further comprises a charging station arranged e.g. in the trunk, serving as a charging post for e.g. electric bicycles or electric cars.

Preferably, the solar tree further comprises a control unit connected to the photovoltaic panels, the battery, and optionally to the illumination sensor, the wind power plant and the charging station. The control unit continuously evaluates the power output of the individual panels or wind power plants and coordinates the rotation of the individual motors to ensure the highest possible illumination of the panels. The possibility of remote control of the rotation of the panels is also foreseen.

Preferably, the trunk (i.e. the central trunk portion, and possibly the branched trunk portions) is formed as a steel skeleton in combination with a concrete shell, and the first and second branches are formed from aluminium and/or an aluminium alloy. The first and second branches may be formed as an aluminium tube wrapped on the outside with a fibreglass coating imitating the surface of the tree, which will reduce the manufacturing costs.

Preferably, in the solar tree embodiment, where the second branch is rotatably connected to the first branch and driven by the second motor, a pin protrudes from the second branch, on which pin a protruding portion of the first branch is coaxially and rotatably mounted. The protruding portion of the first branch means an open projection arranged on the surface of the first branch. The motor, which is mechanically connected to a gearbox mounted in the protruding portion of the first branch, is arranged inside the protruding portion of the first branch. The gearbox and the pin are mechanically connected by a coupling element for transferring torque from the motor and the gearbox to the pin and the second branch. Electrical cables for powering the photovoltaic panels and transmitting the generated electrical energy for storage are routed through the interior of the protruding portion of the first branch, outside the motor, the gearbox and the coupling element, then through holes in the pin, inside the pin, and then through the interior of the second branch.

### Brief Description of Drawings

Figure 1 shows a solar tree according to the present invention.
Figure 2 shows an exploded view of the rotatable connection of the first and second branches.
Figure 3 shows a longitudinal section view of the rotatable connection of the first and second branches.

### Examples

### Example 1

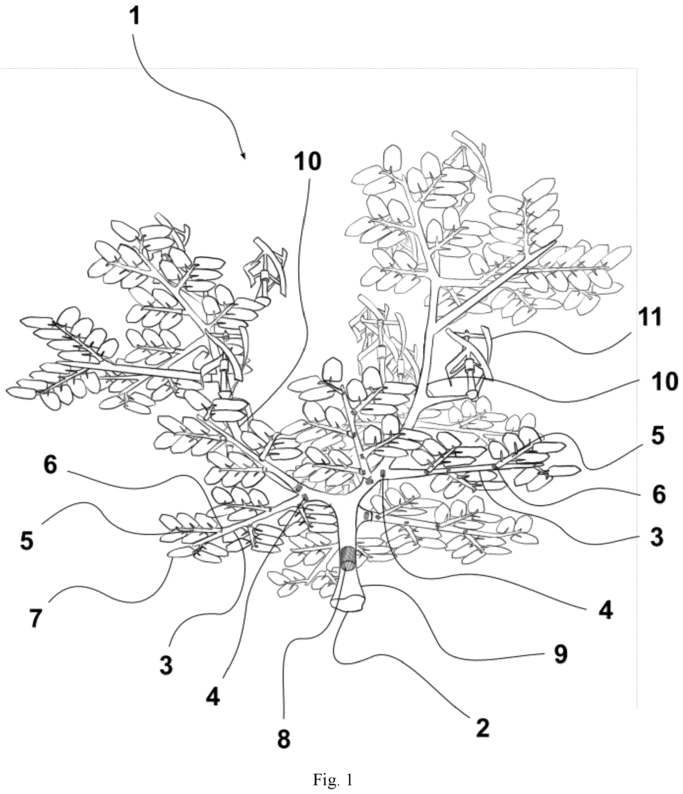

The first example embodiment is a solar tree **1** shown in Figure 1. The solar tree **1** comprises: a trunk **2** comprising a central trunk portion **9** and branching trunk portions **10**; a first branch **3**, wherein each first branch **3** is rotatably connected to the trunk **2** (in particular to the branching trunk portions **10**) and driven by a first servomotor **4**; a second branch **5**, wherein each second branch **5** is rotatably connected to the first branch **3** and driven by a second servomotor **2**; and photovoltaic panels 7 fixedly connected to the second branch **5.** These photovoltaic panels **7** are connected in parallel to each other and are configured to charge an integral battery **8** or an external battery, and subsequently to drive the second servomotor **6**. Vertical wind power plants **11** are fixedly connected to the trunk **2**, in particular to the branching trunk portions **10**, and/or to the first branches **3**. The trunk **2** is formed as a steel skeleton in combination with a concrete shell and the first and second branches **3**, **5** are formed of aluminium, for example as an aluminium casting or a prefabricated aluminium tube.

### Example 2

The second example embodiment is the solar tree **1** of Example 1, but without vertical wind power plants due to its location in a place with low wind intensity. In this example, the number of first and second branches **3**, **5** can be increased compared to Example 1 to increase the output of the solar tree.

### Example 3

A third example embodiment is the solar tree **1** according to Example 1 or 2, wherein the first and second branches **3**, **5** are formed as a prefabricated aluminium tube wrapped on the outside with a fiberglass surface imitating a tree surface.

### Example 4

A fourth example embodiment is the solar tree **1** according to any one of Examples 1 to 3, wherein the second branch **5** is fixedly connected to the first branch **3** rather than rotatably connected by the second servomotor **2**, which reduces manufacturing costs.

### Example 5

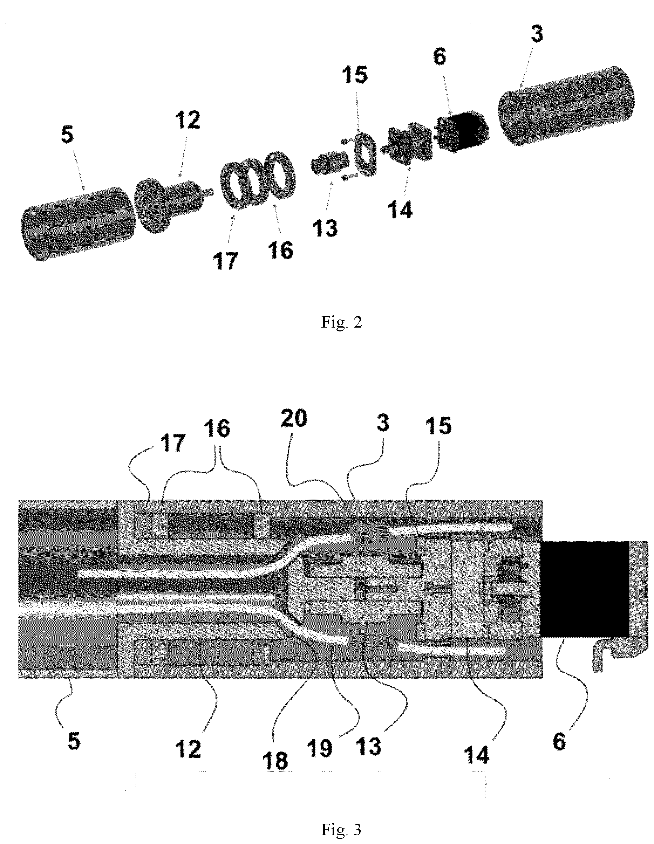

A fifth example embodiment is the rotatable connection of the first and second branches **3**, **5** in the solar tree **1** according to any of Examples 1 to 3, shown in Figures 2 and 3. A pin **12** protrudes from the second branch **5**, on which the protruding portion of the first branch **3** is coaxially and rotatably mounted, wherein a sealing ring **17** and bearings **16** are arranged between the pin **12** and the protruding portion of the first branch **3**. A motor **6**, such as a servomotor, is arranged inside the protruding portion of the first branch **3** and mechanically connected to a gearbox **14** mounted in the protruding portion of the first branch **3** by means of a bracket **15**. The gearbox **14** and the pin **12** are mechanically connected by a coupling element **13** for transmitting the torque from the motor **6** and the gearbox **14** to the pin **12**, and further to the second branch **5**. Electrical cables **19** are routed through the interior of the protruding part of the first branch **3**, outside the motor **6**, the gearbox **14** and the coupling element **13**, further through holes **18** in the pin **12**, inside the pin **12**, and then through the interior of the second branch **5**.

### Industrial applicability

The solar tree described above can be used, for example, as a design solution for energy saving or as an island system for charging stations for electric bicycles or electric cars.

### List of reference signs

- 1: solar tree
- 2: trunk
- 3: first branch
- 4: first motor
- 5: second branch
- 6: second motor
- 7: photovoltaic panel
- 8: battery
- 9: central trunk portion
- 10: branched trunk portion
- 11: wind power plant
- 12: pin of the second branch 5
- 13: coupling element
- 14: gearbox
- 15: bracket for the motor 6
- 16: bearings
- 17: sealing ring
- 18: hole in the pin 12
- 19: cable
- 20: rotatable connector

## Claims

1. A solar tree (1), comprising:
a. a trunk (2);
b. at least one first branch (3) rotatably connected to the trunk (2) and driven by a first motor (4);
c. at least one second branch (5) connected to the first branch (3);
**characterised in that** the second branch (5) is rotatably connected to the first branch (3) and driven by a second motor (6), or **in that** the second branch (5) is fixedly connected to the first branch (3),
and **in that,** the solar tree (1) comprises:
d. at least two photovoltaic panels (7) fixedly connected to the second branch (5), wherein the photovoltaic panels (7) are connected in parallel to each other and are configured to charge a battery (8).

2. The solar tree (1) according to claim 1, **characterised in that** the first and second motors (4, 6) are connected to the battery (8), preferably arranged in the trunk (2).

3. The solar tree (1) according to claim 2, **characterised in that** the photovoltaic panels (7) are configured to drive the second motor (6) by connection via the battery (8).

4. The solar tree (1) according to any one of the preceding claims, **characterised in that** it is connected to an additional external battery.

5. The solar tree (1) according to any one of the preceding claims, **characterised in that** the motor (4, 6) is a servomotor.

6. The solar tree (1) according to any one of the preceding claims, **characterised in that** the photovoltaic panel (7) is bifacial.

7. The solar tree (1) according to any one of the preceding claims, **characterised in that** the trunk (2) is divided into a central trunk portion (9) and at least one branched trunk portion (10), wherein at least one first branch (3) is rotatably connected to the branched trunk portion (10).

8. The solar tree (1) according to any one of the preceding claims, **characterised in that** it further comprises a wind power plant (11) fixedly connected to the trunk (2), in particular to the branched trunk portion (10) or to the first branch (3).

9. The solar tree (1) according to any one of the preceding claims, **characterised in that** an illumination sensor is arranged at a distal end of the first or second branch (3, 5) or of the branched trunk portion (10).

10. The solar tree (1) according to any one of the preceding claims, **characterised in that** it further comprises a charging station arranged in the trunk (2).

11. The solar tree (1) according to any one of the preceding claims, **characterised in that** it further comprises a control unit connected with the photovoltaic panels (7), the battery (8), optionally with the illumination sensor, a wind turbine (11) and the charging station.

12. The solar tree (1) according to any one of the preceding claims, **characterised in that** the trunk (2) is formed as a steel skeleton in combination with a concrete shell and the first and second branches (3, 5) are formed of aluminium and/or aluminium alloy.

13. The solar tree (1) according to claim 12, **characterised in that** the first and second branches (3, 5) are formed as an aluminium tube wrapped on the outside with a fiberglass surface.

14. The solar tree (1) according to any one of the preceding claims, wherein the second branch (5) is rotatably connected to the first branch (3) and driven by the second motor (6), **characterised in that** a pin (12) protrudes from the second branch (5), on which pin (12) a protruding portion of the first branch (3) is coaxially and rotatably mounted, wherein the motor (6), which is mechanically connected to a gearbox (14) mounted in the protruding portion of the first branch (3), is arranged inside the protruding part of the first branch (3), wherein the gearbox (14) and the pin (12) are mechanically connected by a coupling element (13) for transmitting torque from the motor (6) and the gearbox (14) to the pin (12) and the second branch (5), wherein electrical cables (19) are routed through the interior of the protruding portion of the first branch (3), outside the motor (6), the gearbox (14) and the coupling element (13), then through holes (18) in the pin (12), inside the pin (12), and then through the interior of the second branch (5).

## Amended claims

### Amended claims in accordance with Rule 137(2) EPC.

1. A solar tree (1), comprising:
a. a trunk (2);
b. at least one first branch (3) rotatably connected to the trunk (2) and driven by a first motor (4);
c. at least one second branch (5) connected to the first branch (3);
**characterised in that** the second branch (5) is rotatably connected to the first branch (3) and driven by a second motor (6),
and **in that**, the solar tree (1) comprises:
d. at least two photovoltaic panels (7) fixedly connected to the second branch (5), wherein the photovoltaic panels (7) are connected in parallel to each other and are configured to charge a battery (8).

2. The solar tree (1) according to claim 1, **characterised in that** the first and second motors (4, 6) are connected to the battery (8), preferably arranged in the trunk (2).

3. The solar tree (1) according to claim 2, **characterised in that** the photovoltaic panels (7) are configured to drive the second motor (6) by connection via the battery (8).

4. The solar tree (1) according to any one of the preceding claims, **characterised in that** it is connected to an additional external battery.

5. The solar tree (1) according to any one of the preceding claims, **characterised in that** the motor (4, 6) is a servomotor.

6. The solar tree (1) according to any one of the preceding claims, **characterised in that** the photovoltaic panel (7) is bifacial.

7. The solar tree (1) according to any one of the preceding claims, **characterised in that** the trunk (2) is divided into a central trunk portion (9) and at least one branched trunk portion (10), wherein at least one first branch (3) is rotatably connected to the branched trunk portion (10).

8. The solar tree (1) according to any one of the preceding claims, **characterised in that** it further comprises a wind power plant (11) fixedly connected to the trunk (2), in particular to the branched trunk portion (10) or to the first branch (3).

9. The solar tree (1) according to any one of the preceding claims, **characterised in that** an illumination sensor is arranged at a distal end of the first or second branch (3, 5) or of the branched trunk portion (10).

10. The solar tree (1) according to any one of the preceding claims, **characterised in that** it further comprises a charging station arranged in the trunk (2).

11. The solar tree (1) according to any one of the preceding claims, **characterised in that** it further comprises a control unit connected with the photovoltaic panels (7), the battery (8), optionally with the illumination sensor, a wind turbine (11) and the charging station.

12. The solar tree (1) according to any one of the preceding claims, **characterised in that** the trunk (2) is formed as a steel skeleton in combination with a concrete shell and the first and second branches (3, 5) are formed of aluminium and/or aluminium alloy.

13. The solar tree (1) according to claim 12, **characterised in that** the first and second branches (3, 5) are formed as an aluminium tube wrapped on the outside with a fiberglass surface.

14. The solar tree (1) according to any one of the preceding claims, wherein the second branch (5) is rotatably connected to the first branch (3) and driven by the second motor (6), **characterised in that** a pin (12) protrudes from the second branch (5), on which pin (12) a protruding portion of the first branch (3) is coaxially and rotatably mounted, wherein the motor (6), which is mechanically connected to a gearbox (14) mounted in the protruding portion of the first branch (3), is arranged inside the protruding part of the first branch (3), wherein the gearbox (14) and the pin (12) are mechanically connected by a coupling element (13) for transmitting torque from the motor (6) and the gearbox (14) to the pin (12) and the second branch (5), wherein electrical cables (19) are routed through the interior of the protruding portion of the first branch (3), outside the motor (6), the gearbox (14) and the coupling element (13), then through holes (18) in the pin (12), inside the pin (12), and then through the interior of the second branch (5).
